# EUROPEAN PATENT APPLICATION

(11) **EP 4 556 949 A1**
(43) Date of publication of application: **21.05.2025**
(21) Application number: 23210405.9
(22) Date of filing: 16.11.2023
(51) Int. Cl.: G01S 7/497, G01S 17/931, G01S 17/42

(54) **A METHOD FOR DETERMINING A CONTAMINATION OF AN OPTICAL SENSOR OF A VEHICLE**

(71) Applicant: Volvo Car Corporation, 405 31 Göteborg (SE)
(72) Inventor: ÅHLUND, Daniel, 40531 Göteborg (SE); MAREL, Elías, 40531 Göteborg (SE)
(74) Representative: Maiwald GmbH

(57) **Abstract**

The disclosure relates to a method (100) for determining a contamination of an optical sensor (11) of a vehicle (1), the method (100) comprising:
- (102) obtaining first data indicative of a measured detection range (17) of the optical sensor (11) to a ground of a surrounding of the vehicle (1) based on a measurement of the ground by the optical sensor (11),
- (103) obtaining second data indicative of a nominal detection range (16) of the optical sensor (11) to the ground of the surrounding of the vehicle (1), and
- (104) determining the contamination of the optical sensor (11) based on a comparison of the first data to the second data.

## Description

### TECHNICAL FIELD

The present disclosure relates to a method for determining a contamination of an optical sensor of a vehicle, a data processing apparatus, a vehicle, and a computer program product.

### BACKGROUND ART

The ability of autonomous vehicles to gather accurate information about their surroundings is critical for ensuring traffic safety. Optical sensors such as LiDAR sensors and cameras can play a vital role in providing this information, as they enable detailed coverage of the vehicle surroundings. However, these sensors may be vulnerable to contamination and environmental factors that can affect their functions.

To address these challenges, various processes have been developed to detect sensor contamination and clean the sensors. These methods range from simple cleaning processes to complex algorithms that can identify and automatically remove contaminations. The latter methods also require additional detectors.

A simpler vehicle on-board solution to detect a contaminated sensor would be highly advantageous, simplifying the contamination detection process while ensuring the sensor's optimal performance.

### SUMMARY

The problem is at least partially solved or alleviated by the subject matter of the independent claims of the present disclosure, wherein further examples are incorporated in the dependent claims.

According to a first aspect, there is provided a method for determining a contamination of an optical sensor of a vehicle, the method comprising:
- obtaining first data indicative of a measured detection range of the optical sensor to a ground of a surrounding of the vehicle based on a measurement of the ground by the optical sensor;
- obtaining second data indicative of a nominal detection range of the optical sensor to the ground of the surrounding of the vehicle; and
- determining the contamination of the optical sensor based on a comparison of the first data to the second data.

Accordingly, the method enables a reliable determination of contamination of the optical sensor by, first, obtaining the first data, which indicates the measured ground detection range of the optical sensor concerning the ground in the vicinity of the vehicle, based on the sensor's ground measurement. This, together with the second data, indicating the nominal detection range of the optical sensor, allows for a precise determination of sensor contamination. The contamination of the optical sensor can be accurately determined by comparing the ground detection range with the nominal detection range. Due to the accurate contamination detection, appropriate actions may be provided for cleaning or maintaining the optical sensor to ensure its proper functioning.

The first data may indicate the ground detection range of the optical sensor, which extends to the ground in the vicinity of the vehicle. The ground detection range may be determined by the optical sensor based on a direct measurement of the ground or a reflection of, e.g., light rays from the ground surface. The first data may be based on point cloud data representing the ground detection range, which may be the ground in the vicinity of the vehicle or representing the drivable area in front of the car. The point cloud data of the ground detection range may be represented as a scalar value determined based on the point cloud data. The second data may indicate the nominal detection range of the optical sensor that is expected based on the optical sensor's specifications and/or settings. The nominal detection range of the optical sensor to the ground of the surrounding of the vehicle may be the expected or typical ground detection range of the optical sensor. The nominal detection range of the optical sensor to a ground of a surrounding of the vehicle may further be the actually measured ground detection range of the optical sensor.

Determining contamination of the optical sensor may be achieved by comparing the first data with the second data, thereby detecting one or more deviations indicative of the contamination. For example, the vehicle may be equipped with a LiDAR (Light Detection and Ranging) sensor as the optical sensor, which emits laser beams to scan its surroundings. As the LiDAR sensor scans, it collects data points from the reflection of laser light e.g., of the surrounding ground. These data points may be collected in the form of a point cloud. The point cloud would contain data points that represent objects in the vicinity of the car such as the ground, the drivable area or the road in the surrounding of the vehicle. By analyzing the point cloud data, the system may determine the maximal ground detection range in front of the vehicle. Another approach may be to determine the distance from the vehicle to the ground respectively. This may be done by identifying the lowest data points in the point cloud, as these points often correspond to the ground. The second data, which represents the nominal detection range, could be based on specifications and/or settings of the optical sensor. These specifications could define the expected range from the optical sensor to the ground in normal, uncontaminated conditions. Then, the measured detection range (e.g., based on the scalar value of the point cloud data) may be compared with the nominal detection range. If the measured detection range is e.g., significantly shorter than the nominal range, it could indicate that the optical sensor is contaminated, as the contamination may prevent the laser beams from reaching the ground or being detected by the optical sensor, leading to a reduced measured range.

The first data and the second data may be obtained from the optical sensor itself or from a vehicle's control system or data processing apparatus, for example. The optical sensor may, for example, obtain the measured detection range and provide the nominal detection range and the corresponding data. Alternatively, the data may be obtained by the vehicle's control system or data processing apparatus.

The method may be at least partly computer-implemented and may be implemented in software or in hardware, or in software and hardware. Accordingly, one, multiple or all steps of the method may be carried out by a data processing apparatus, in particular a computer. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to an example, the first data may comprise a first parameter indicative of the measured ground detection range, and the second data may comprise a second parameter indicative of the nominal detection range. By assigning parameters to the first and second data, the process of identifying contamination by directly comparing these two parameters may be simplified. For example, the first data may consist of a first parameter indicating the measured ground detection range of the optical sensor, while the second data may comprise a second parameter indicating the nominal detection range. Contamination could be detected if e.g., the first parameter (measured detection range) is less than the second parameter (nominal detection range or a threshold value based on the nominal detection range, e.g., the nominal detection range ± 10% or any other absolute or relative value). Appropriate actions may then be prompted for optical sensor maintenance or cleaning to ensure the optical sensor's proper functionality.

According to an example, the determining of the contamination may comprise determining of a degree of the contamination based on a difference between the first parameter and the second parameter. Instead of a simple binary determination of whether contamination is present or not, a degree of contamination may thereby be determined. This may be achieved by quantifying the contamination degree based on the difference between the first parameter and the second parameter, wherein the second parameter could be a threshold value of the nominal detection range as mentioned above. For example, a LiDAR sensor may have a nominal detection range specified by the manufacturer, which may be, as a mere example, 100 meters. Of course, the nominal detection range may also be less or more or in the form of a range rather than an absolute value. The exemplary nominal detection range may correspond to the expected performance under ideal conditions without any contamination of the optical sensor. The LiDAR sensor may scan the ground in the surrounding of the vehicle and measures the actual ground detection range. In an exemplary case, it may return a measured ground detection range of e.g., 80 meters. The second parameter in this example may the manufacturer-specified nominal detection range, which is 100 meters in this exemplary scenario. To determine the degree of contamination, the difference between the first and second parameters would be calculated. In this case, it would be 100 meters (nominal detection range) - 80 meters (measured detection range) = 20 meter. If the difference would be significant, such as 20 meters, it indicates a substantial degree of contamination for example. In this scenario, the result might suggest that the LiDAR sensor's performance may be significantly impaired due to contamination. If the difference would be smaller, e.g., 5 meters, it would indicate a relatively minor deviation from the nominal performance, suggesting a lower degree of contamination. Based on the degree of contamination an appropriate cleaning process or intensity of cleaning process, e.g., a duration and/or cleaning agent to be used could be determined.

According to an example, the method may further comprise determining at least one control parameter for the control instructions in dependence of the determined degree of contamination. The at least one control parameter may be indicative of at least one of a quantity of a cleaning agent to be used in the cleaning process, a number of sprays of the cleaning process, and a time of the cleaning process. Based on the degree of contamination determined e.g., high degree or comparatively lower degree of contamination, different control parameters for the control instructions may be determined. These control parameters may be related to the quantity of cleaning agent, the number of sprays during the cleaning process, or the duration of the cleaning process. The selected control parameters may thereby be adapted according to the degree of contamination, optimizing the cleaning process accordingly. Thereby, unnecessary, excessive, and inadequate cleaning processes may be prevented, which may save cleaning agent and improve the performance of the optical sensor.

According to an example, the nominal detection range may be at least one of a maximum detection range and an average detection range based on multiple measurements of the ground by the optical sensor. The nominal detection range may be determined based on data obtained from the optical sensor's measurements of the ground. Specifically, the nominal detection range can be derived from either the maximum detection range or an average detection range. The maximum detection range may correspond to the optical sensor's maximum capability in terms of detecting objects or surfaces on the ground. It may represent the furthest distance at which the optical sensor can (reliably) detect objects. An average detection range may be computed as an average of multiple measurements of the optical sensor. This may provide a more stable and representative reference for the nominal detection range and thereby increase the accuracy of the method for determining a contamination.

According to an example, the method may further comprise determining third data indicative of a measured reflectance of at least one static object in the surrounding of the vehicle based on a measurement of the reflectance of the at least one static object in the surrounding of the vehicle by the optical sensor. The method may further comprise providing fourth data indicative of a nominal reflectance of the at least one static object in the surrounding of the vehicle, wherein the determining of the contamination may be further based on a comparison of the third data to the fourth data. The third data may represent the measured reflectance of at least one static object located in the surrounding of the vehicle. The optical sensor may capture data related to the reflectance properties of static objects in its surrounding or, in other words, environment. Reflectance, in this context, may refer to the amount of light that is reflected by an object. Additionally, the third data may be based on point cloud data representing the reflectance of the at least one static object in the surroundings of the vehicle as a point cloud. The method may provide fourth data, which may be indicative of a nominal reflectance of the at least one static object in the surrounding of the vehicle. This nominal reflectance of the at least one static object may serve as a reference point, representing the expected or standard reflectance properties of these static objects. It may be for example a predetermined or known value that is considered ideal or typical. The determination of contamination in the optical sensor may be further based on a comparison between the third data and the fourth data. This comparison between measured reflectance of the at least one static object and nominal reflectance of the at least one static object may allow to identify any discrepancies or deviations of the measured reflectance in relation to the nominal reflectance of the at least one static object. If for example the measured reflectance of the at least one static object significantly differs from the nominal reflectance of the at least one static object, it could be indicative of optical sensor contamination. This difference between the third data and the fourth data may be represented as a scalar value which may indicate a degree of contamination.

The contamination determination of the optical sensor may comprise a multi-step process involving first the determination of the ground detection range and second the determination of reflectance data from one or more static objects. For example, point cloud data from static objects in the vehicle's surrounding may be collected and a scalar value representing the measured reflectance of at least one static object could be determined. In parallel, point cloud data of the ground detection range or drivable area in front of the vehicle may be collected and then a second scalar value representing the ground detection range may be determined. These scalar values may be combined to a single scalar value that represents the degree of contamination of the optical sensor and for example could be compared to expected values to determine a contamination of the optical sensor. If the scalar value would be for example lower than expected, a cleaning request could be initiated. In case the scalar value would not be lower than expected, no action would be requested. If the deviation would be very large, the data could be for example considered as erroneous and further action could be disabled. Such multi-step approach may ensure a more reliable and robust estimation of a contamination of the optical sensor.

The data processing of point cloud data may be referred to as a high-level solution that may provide additional information for evaluating data reliability in the context of autonomous driving or advanced driver-assistance systems (ADAS). This method doesn't necessarily need to replace other solutions but may enhance the overall data assessment process. It may be used in conjunction with other sensor technologies and data validation methods to improve the overall robustness and reliability of the system. The high-level data solution of the optical sensor may for example be combined with low-level data from its surrounding such as data of information about the distance to objects, their size, shape, and position.

According to an example, the third data may comprise a third parameter indicative of the measured reflectance of the at least one static object and the fourth data may comprise a fourth parameter indicative of the nominal reflectance of the at least one static object. The contamination may be determined if for example the third parameter is less than the fourth parameter. The third data may comprise a third parameter representing the measured reflectance of at least one static object in the surrounding. This parameter may quantify how much light is being reflected by the object as detected by the optical sensor. The third data may be based on point cloud data representing the reflectance of the at least one static object in the surrounding of the vehicle as a point cloud. The fourth data may comprise a fourth parameter, which indicates the nominal or expected reflectance of the static object in the surrounding of the vehicle. This value may represent the standard or ideal reflectance properties of the at least one static object. The contamination of the optical sensor may then be determined by comparing the third parameter with the fourth parameter. If for example the third parameter is less than the fourth parameter, there may be a discrepancy between the actual reflectance measurements and the expected values which could indicate that the sensor performance would be compromised due to contamination. The discrepancy between the third parameter with the fourth parameter may be a scalar value.

The nominal reflectance of the at least one static object in the surrounding of the vehicle may be stored in a database or memory of the vehicle and may be based on previous measurements or calculations.

According to an example, the fourth data may be based on a measurement of the reflectance of the at least one static object by at least one further optical sensor of at least one further vehicle. The fourth data may be provided by the at least one further vehicle to the vehicle via a wireless data communication. The fourth data, which represents the nominal reflectance of at least one static object in the surrounding of the vehicle, may be derived from measurements of the reflectance of at the least one static object by at least one additional optical sensor arranged on the at least one further vehicle. The data collected by this further vehicle may be shared with the vehicle via wireless data communication. This communication allows the vehicle to receive reference data about the nominal reflectance values of the at least one static object in its vicinity.

By collecting data of the at least one further vehicle, the vehicle may enhance its contamination detection capabilities. The vehicle may gain access to a broader dataset of reference reflectance values, providing a more comprehensive understanding of the typical reflectance characteristics of objects in its surrounding. This collaborative approach of sharing data among vehicles ensures the accuracy of contamination detection and aids in optimizing sensor maintenance strategies, ultimately contributing to improved optical sensor performance and traffic safety.

The fourth data may not be limited to being stored solely on further vehicles. Instead, it can be stored in centralized locations such as remote servers or cloud-based platforms.

According to an example, the method may comprise detecting a position of the at least one static object. The measured reflectance of the at least one static object may further be based on a comparison of the detected position of the at least one static object to a mapped position of the at least one static object based on map data. In addition, the map data may be indicative of the nominal reflectance of the at least one static object at the mapped position.

For example, the optical sensor of the vehicle may identify and track the position of at least one static object within its surrounding. This positional information may be continuously updated as the vehicle moves. The vehicle may have access to map data, which may include objects within the surrounding of the vehicle. This map data may comprise information about the expected or nominal reflectance values of static objects, specifically at various positions in the surrounding. If a static object is detected by the vehicle's optical sensor, the vehicle may obtain the map data which may contain nominal reflectance values associated with the position of the static object. The nominal reflectance value may serve as a baseline for comparison. The optical sensor of the vehicle may measure the reflectance of the static object. Then, the measured reflectance may be compared to the nominal reflectance value obtained from the map data. Deviations between the two values can be indicative of contamination on the optical sensor. This measurement of the reflectance of the static object may take place in real-time, while the vehicle is moving.

By using positional information and map data, the vehicle may effectively determine the measured reflectance of static objects and assess the degree of contamination on its optical sensor.

According to an example, the method may comprise detecting a shape of the at least one static object. The measured reflectance of the at least one static object may be based on a recognition of the detected shape of the at least one static object compared to different shapes of static objects based on shape data. The shape data may further be indicative of the nominal reflectance of the at least one static object of the recognized shape. The vehicle may be designed to not only recognize static objects but also to recognize and categorize their shapes. The vehicle may have access to shape data, which includes information about the various shapes of static objects and their corresponding nominal reflectance values. This data may be used as a reference to assess the measured reflectance of detected static objects. As a static object is identified, the vehicle may consider the shape of the identified object and refer to the shape data to find the nominal reflectance associated with that specific shape. The vehicle then compares the reflectance measurement with the nominal reflectance value linked to the recognized shape in the shape data. Any discrepancies between these values can be indicative of contamination on the optical sensor. Examples of static objects that may be detected and assessed based on their reflectance may be road signs, lane markings, pedestrian crosswalks, trees, traffic lights or similar. The shape may be determined by the outline or the geometry of the static objects for example.

By using shape recognition and shape data, the vehicle may effectively determine the measured reflectance of static objects and assess the degree of contamination on its optical sensor.

According to an example, the method may further comprise providing the control instructions for initiating the cleaning process of the optical sensor based on the determination of the contamination. If a contamination is detected, control instructions may be sent to a cleaning system, which may be associated with the optical sensor. The cleaning system may include components like a cleaning agent reservoir, nozzles, and mechanisms for cleaning the optical sensor. Upon receiving the control instructions for initiating the cleaning, the cleaning system may be activated to carry out the cleaning process, which may be specified in correspondence to a degree of contamination.

The method may further comprise contamination monitoring for the optical sensor. In particular, a signal based on determining the contamination may be in form of a cycle or a recurring or periodic signal. For example, if a contamination surpasses a predefined threshold, the cleaning system may initiate a cleaning process to restore the optical sensor to a clean state. Following the cleaning process, the optical sensor's performance may be monitored. When the detected degree of contamination is less than a predetermined threshold, control instructions may be provided to the vehicle's cleaning system. These control instructions may initiate a cleaning process for the optical sensor. The control instructions may further specify the type and duration of the cleaning process, ensuring that it is effective in addressing the degree or, in other words, degree of contamination detected. For example, when the degree of contamination is less than a first threshold, the cleaning system may proportionally increase the cleaning agent quantity. Conversely, when the degree of contamination falls below a second threshold, the cleaning system may proportionally decrease the cleaning agent quantity. The first threshold may be set higher than the second threshold to ensure that the cleaning agent may be used reasonable while maintaining effective contamination removal.

In cases where the degree of contamination suggests a critical impairment of the optical sensor's functionality or the cleaning system's effectiveness, a signal indicative of a potential malfunction may be generated. This signal may serve as an alert to the operator of the vehicle or maintenance personnel.

Further, environmental factors such as vehicle speed, and sensor operating conditions may be taken into account when determining the cleaning agent quantity. This way, the cleaning agent quantity may be calculated to ensure the thorough removal of contaminants while minimizing waste and preserving sensor performance.

The control instructions may be sent to the cleaning system via wireless or wired communication, for example. The cleaning process may be carried out with a cleaning system that uses mechanical and/or chemical cleaning techniques.

According to an example, the optical sensor may be at least one of a LiDAR sensor and an infrared sensor or other laser-based sensors, which may include laser rangefinders, laser-based scanners or ToF (Time-of-Flight) sensors may be used alternatively or in addition. In addition, or alternatively, ultrasonic based sensors or radar based sensors may be used as optical sensors, for example. Further, in addition, or alternatively, a camera as optical sensor may be used.

According to a second aspect, there is provided a data processing apparatus comprising means for carrying out the method of the first aspect. The means may be a computer, e.g., including a processor and a computer readable medium, particularly the one described below with respect to the computer program product of the fourth aspect.

According to a third aspect, there is provided a vehicle comprising the data processing apparatus of the second aspect.

According to a fourth aspect, there is provided a computer program product comprising instructions which, when the program is executed by a computer, cause the computer to carry out the method of the first aspect. The computer program product may be a computer program as such or a product, e.g., a computer readable medium, having stored the computer program thereon. Additionally, there may be provided a computer readable medium having stored the computer program element of the fourth aspect.

It is noted that the above examples may be combined with each other irrespective of the aspect involved. In particular, aspects of the disclosure described herein may be applied to the method for determining a contamination of an optical sensor of a vehicle, the data processing apparatus, the vehicle and the computer program product.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows schematically an example of a vehicle comprising a data processing apparatus comprising means for carrying out the method according to the present disclosure;
- Figures 2A-2B: show schematically an example of a vehicle comprising an optical sensor performing ground detection;
- Figures 3A-3C: show schematically an example of a vehicle comprising an optical sensor performing reflectance measurement of a static object; and
- Figure 4: shows schematically an example of a method for determining a contamination of an optical sensor of a vehicle according to the present disclosure.

### DETAILED DESCRIPTION

The Figures are merely schematic representations and serve only to illustrate examples of the disclosure. Identical or equivalent elements are in principle provided with the same reference signs.

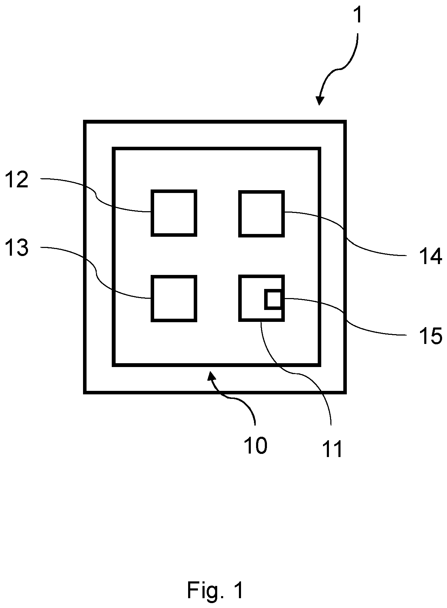

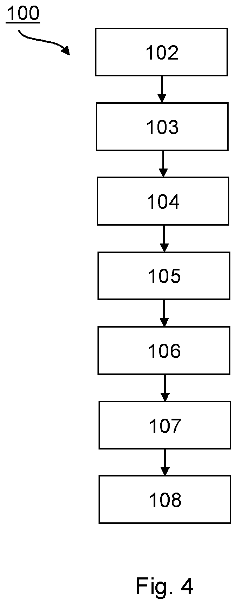

Figure 1 shows a vehicle 1 comprising a cleaning system 10. The cleaning system 10 comprises a cleaning reservoir 14 for a cleaning agent and a nozzle 15 for cleaning a potentially contaminated optical sensor 11. The vehicle 1 further comprises a data processing apparatus 13 comprising means for carrying out a method 100 for determining a contamination of the optical sensor 11 of the vehicle 1 as exemplary shown in Fig. 4.

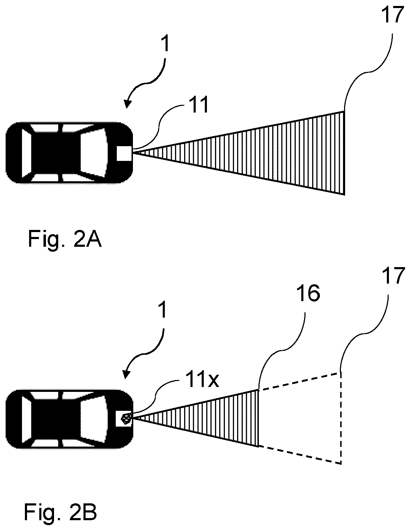

The optical sensor 11 may be configured to generate first data indicative of a measured ground detection range 17 to a ground of a surrounding of the vehicle 1 as shown in Fig. 2A. The first data may be compared to second data indicative of a nominal detection range 16 of the optical sensor 11 to the ground of the surrounding of the vehicle 1 as shown in Fig. 2B. The measured ground detection range 17 of a contaminated optical sensor 11x may be lower compared to the nominal detection range 16 of a clean optical sensor 11 as shown in Fig. 2B. A determination of the contamination of the contaminated optical sensor 11x may be done by comparing the measured ground detection range 17 to the nominal detection range 16. In Fig. 2B, the measured ground detection range 17 is less than the expected nominal detection range 16, indicating a contaminated optical sensor 11x. The reflections of the ground detected by the optical sensor 11 may be represented as a point cloud and the difference between the first data and second data may be represented as a scalar value.

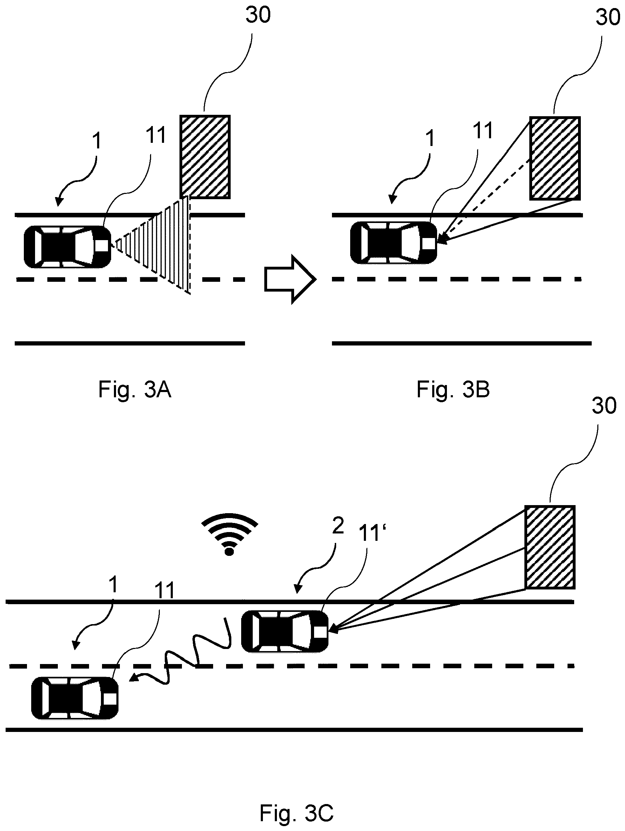

A further way to determine if an optical sensor 11 is contaminated is shown in Figs. 3A and 3B. An optical sensor 11 of a vehicle 1 scans the surroundings while the vehicle 1 is moving, as shown in Fig. 3A. As shown in Fig. 3B, a static object 30 in the surrounding of the vehicle 1 is reflecting emitted light of the optical sensor 11 and a reflectance as indicated by continuous arrows of the static object 30 in the surrounding of the vehicle 1 is detected by the optical sensor 11. In this example, the expected reflectance, if the optical sensor 11 would be clean, would comprise the two continuous arrows, representing the actual reflected light of the static Object 30 and a dashed arrow, representing the expected reflected light of the static object 30. Thus, in this example the optical sensor 11 is contaminated as the measured reflectance of the static object 30 differs from the expected reflectance of the static object 30. For example, a static object may be one of a road marking, road sign, buildings or structures near the road, parked vehicles, guardrails, trees or similar.

In Fig. 3C, it is shown how a further vehicle 2 measures the reflectance of a static object 30 in the surrounding with a further optical sensor 11' as described in Fig. 3A and Fig. 3B. The measured reflectance of the static object 30 is indicated by three continuous arrows in Fig. 3C. This measured reflectance of the static object 30 can now be shared with the vehicle 1 via wireless communication and serve for example as a nominal reflectance of the static object 30 for determining the contamination of the optical sensor 11 of the vehicle 1 by reflectance measurements of the static object 30 as shown in Figs. 3A and 3B.

In Fig. 4, steps for carrying out the method 100 for determining a contamination of the optical sensor 11 of the vehicle 1 are shown.

In a first step 102, first data indicative of a measured detection range 17 of the optical sensor 11 to a ground of a surrounding of the vehicle 1 based on a measurement of the ground by the optical sensor 11 is obtained.

In a next step 103, second data indicative of a nominal detection range 16 of the optical sensor 11 to the ground of the surrounding of the vehicle 1 is obtained, and in a further step 104, the contamination of the optical sensor 11 based on a comparison of the first data to the second data is determined.

Optionally, in a further step 105, third data indicative of a measured reflectance of at least one static object 30 in the surrounding of the vehicle 1 based on a measurement of the reflectance of the at least one static object 30 in the surrounding of the vehicle 1 by the optical sensor 11 is determined.

In an optional next step 106, fourth data indicative of a nominal reflectance of the at least one static object in the surrounding of the vehicle 1 is provided.

In an optional next step 107, the contamination of the optical sensor 11 is determined if the third parameter is less than the fourth parameter, or in other words, based on a comparison of the third data to the fourth data.

Alternatively, the determined contamination of the optical sensor 11 is based on a multi-step process where point cloud data of the first data is compared to the second data and point cloud data of the third data is compared to the fourth data, each comparison resulting in a scalar value. These scalar values can be combined and may result in a single scalar value representing the degree of contamination of the optical sensor 11.

In a further step 108, control instructions for initiating a cleaning process of the optical sensor 11 based on the determination of the contamination of the optical sensor 11 may be provided.

At least some or all of the previously mentioned steps 102 to 108 may be carried out by the data processing apparatus 13 and/or the optical sensor 11, for example. As shown herein exemplary, the data processing apparatus 13 may be part of a cleaning system 10 including the optical sensor 11 and the respective components for cleaning the optical sensor 11. Alternatively, the data processing apparatus 13, the computer program product 12 and/or the optical sensor 11 may be located outside the cleaning system 10 in the vehicle 1. For example, the data processing apparatus 13 may be a central or board computer of the vehicle 1, carrying out other tasks in addition to the method 100.

Consequently, the cleaning process may be carried out by the cleaning system 10 by cleaning the optical sensor 11 with cleaning agent from the cleaning reservoir 14 via the nozzle 15.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 1: vehicle
- 2: further vehicle
- 10: cleaning system
- 11: optical sensor
- 11': further optical sensor
- 11x: contaminated optical sensor
- 12: computer program product
- 13: data processing apparatus
- 14: cleaning reservoir
- 15: nozzle
- 16: nominal detection range
- 17: measured ground detection range
- 30: static object
- 100: method for determining a contamination of an optical sensor
- 102: obtaining first data indicative of a measured detection range
- 103: obtaining second data indicative of a nominal detection range
- 104: determining the contamination of the optical sensor based on a comparison of the first data to the second data
- 105: determining third data indicative of a measured reflectance of at least one static object
- 106: providing fourth data indicative of a nominal reflectance of the at least one static object
- 107: determining of the contamination based on a comparison of the third data to the fourth data
- 108: providing control instructions for initiating the cleaning process of the optical sensor

## Claims

1. A method (100) for determining a contamination of an optical sensor (11) of a vehicle (1), the method (100) comprising:
- (102) obtaining first data indicative of a measured detection range (17) of the optical sensor (11) to a ground of a surrounding of the vehicle (1) based on a measurement of the ground by the optical sensor (11),
- (103) obtaining second data indicative of a nominal detection range (16) of the optical sensor (11) to the ground of the surrounding of the vehicle (1), and
- (104) determining the contamination of the optical sensor (11) based on a comparison of the first data to the second data.

2. The method (100) of claim 1, wherein the first data comprises a first parameter indicative of the measured detection range (17) and the second data comprises a second parameter indicative of the nominal detection range (16), and wherein the contamination is determined if the first parameter is less than the second parameter.

3. The method (100) of claim 1 or 2, wherein the determining of the contamination comprises determining of a degree of the contamination based on a difference between the first parameter and the second parameter.

4. The method (100) of claim 3, wherein the method (100) further comprises determining at least one control parameter for the control instructions in dependence of the determined degree of contamination, the at least one parameter being indicative of at least one of a quantity of a cleaning agent to be used in the cleaning process, a number of sprays of the cleaning process, and a time of the cleaning process.

5. The method (100) of any one of the previous claims, wherein the nominal detection range (16) is at least one of a maximum detection range and an average detection range based on multiple measurements of the ground by the optical sensor (11).

6. The method (100) of any one of the previous claims, wherein the method (100) further comprises:
- (105) determining third data indicative of a measured reflectance of at least one static object (30) in the surrounding of the vehicle (1) based on a measurement of the reflectance of the at least one static object (30) in the surrounding of the vehicle (1) by the optical sensor (11), and
- (106) providing fourth data indicative of a nominal reflectance of the at least one static object (30) in the surrounding of the vehicle (1),
wherein the determining of the contamination is further based on a comparison of the third data to the fourth data (107).

7. The method (100) of claim 6, wherein the third data comprises a third parameter indicative of the measured reflectance of the at least one static object (30) and the fourth data comprises a fourth parameter indicative of the nominal reflectance of the at least one static object (30), and wherein the contamination is determined if the third parameter is less than the fourth parameter.

8. The method (100) of claim 6 or 7, wherein the fourth data is based on a measurement of the reflectance of the at least one static object (30) by at least one further optical sensor (1 1') of at least one further vehicle (2), and wherein the fourth data is provided by the at least one further vehicle (2) to the vehicle (1) via a wireless data communication.

9. The method (100) of any one of claims 6 to 8, wherein the method (100) comprises detecting a position of the at least one static object (30), and wherein the measured reflectance of the at least one static object (30) is based on a comparison of the detected position of the at least one static object (30) to a mapped position of the at least one static object (30) based on map data, the map data being indicative of the nominal reflectance of the at least one static object (30) at the mapped position.

10. The method (100) of any one of claims 6 to 9, wherein the method (100) comprises detecting a shape of the at least one static object (30), and wherein the measured reflectance of the at least one static object (30) is based on a recognition of the detected shape of the at least one static object (30) compared to different shapes of static objects based on shape data, the shape data being indicative of the nominal reflectance of the at least one static object (30) of the recognized shape.

11. The method (100) of any one of the previous claims, wherein the method (100) further comprises:
- (108) providing the control instructions for initiating the cleaning process of the optical sensor (11) based on the determination of the contamination.

12. The method (100) of any one of the previous claims, wherein the optical sensor (11) is at least one of a LiDAR sensor and an infrared sensor.

13. A data processing apparatus (13) comprising means for carrying out the method (100) of any one of the preceding claims.

14. A vehicle (1) comprising the data processing apparatus (13) of claim 13, the optical sensor (11) and a cleaning system (10), the cleaning system (10) comprising a reservoir (14) for containing a cleaning agent and a nozzle (15) for cleaning the optical sensor (11), wherein the reservoir (14) is configured to provide the cleaning agent to the nozzle (15) and the nozzle (15) is configured to clean the optical sensor (11) with the thereto provided cleaning agent.

15. A computer program product (12) comprising instructions which, when the program is executed by a computer, cause the computer to carry out the method (100) of any one of claims 1 to 12.

## Amended claims

### Amended claims in accordance with Rule 137(2) EPC.

1. A computer implemented method (100) for determining a contamination of an optical sensor (11) of a vehicle (1), the method (100) comprising:
(102) obtaining first data indicative of a measured detection range (17) of the optical sensor (11) to a ground of a surrounding of the vehicle (1) based on a measurement of the ground by the optical sensor (11),
(103) obtaining second data indicative of a nominal detection range (16) of the optical sensor (11) to the ground of the surrounding of the vehicle (1), and
(104) determining the contamination of the optical sensor (11) based on a comparison of the first data to the second data.

2. The computer implemented method (100) of claim 1, wherein the first data comprises a first parameter indicative of the measured detection range (17) and the second data comprises a second parameter indicative of the nominal detection range (16), and wherein the contamination is determined if the first parameter is less than the second parameter.

3. The computer implemented method (100) of claim 1 or 2, wherein the determining of the contamination comprises determining of a degree of the contamination based on a difference between the first parameter and the second parameter.

4. The computer implemented method (100) of claim 3, wherein the method (100) further comprises determining at least one control parameter for the control instructions in dependence of the determined degree of contamination, the at least one parameter being indicative of at least one of a quantity of a cleaning agent to be used in the cleaning process, a number of sprays of the cleaning process, and a time of the cleaning process.

5. The computer implemented method (100) of any one of the previous claims, wherein the nominal detection range (16) is at least one of a maximum detection range and an average detection range based on multiple measurements of the ground by the optical sensor (11).

6. The computer implemented method (100) of any one of the previous claims, wherein the method (100) further comprises:
(105) determining third data indicative of a measured reflectance of at least one static object (30) in the surrounding of the vehicle (1) based on a measurement of the reflectance of the at least one static object (30) in the surrounding of the vehicle (1) by the optical sensor (11), and
(106) providing fourth data indicative of a nominal reflectance of the at least one static object (30) in the surrounding of the vehicle (1),
wherein the determining of the contamination is further based on a comparison of the third data to the fourth data (107).

7. The computer implemented method (100) of claim 6, wherein the third data comprises a third parameter indicative of the measured reflectance of the at least one static object (30) and the fourth data comprises a fourth parameter indicative of the nominal reflectance of the at least one static object (30), and wherein the contamination is determined if the third parameter is less than the fourth parameter.

8. The computer implemented method (100) of claim 6 or 7, wherein the fourth data is based on a measurement of the reflectance of the at least one static object (30) by at least one further optical sensor (11') of at least one further vehicle (2), and wherein the fourth data is provided by the at least one further vehicle (2) to the vehicle (1) via a wireless data communication.

9. The computer implemented method (100) of any one of claims 6 to 8,
wherein the method (100) comprises detecting a position of the at least one static object (30), and wherein the measured reflectance of the at least one static object (30) is based on a comparison of the detected position of the at least one static object (30) to a mapped position of the at least one static object (30) based on map data, the map data being indicative of the nominal reflectance of the at least one static object (30) at the mapped position.

10. The computer implemented method (100) of any one of claims 6 to 9,
wherein the method (100) comprises detecting a shape of the at least one static object (30), and wherein the measured reflectance of the at least one static object (30) is based on a recognition of the detected shape of the at least one static object (30) compared to different shapes of static objects based on shape data, the shape data being indicative of the nominal reflectance of the at least one static object (30) of the recognized shape.

11. The computer implemented method (100) of any one of the previous claims, wherein the method (100) further comprises:
(108) providing the control instructions for initiating the cleaning process of the optical sensor (11) based on the determination of the contamination.

12. The computer implemented method (100) of any one of the previous claims, wherein the optical sensor (11) is at least one of a LiDAR sensor and an infrared sensor.

13. A data processing apparatus (13) comprising means for carrying out the method (100) of any one of the preceding claims.

14. A vehicle (1) comprising the data processing apparatus (13) of claim 13, the optical sensor (11) and a cleaning system (10), the cleaning system (10) comprising a reservoir (14) for containing a cleaning agent and a nozzle (15) for cleaning the optical sensor (11), wherein the reservoir (14) is configured to provide the cleaning agent to the nozzle (15) and the nozzle (15) is configured to clean the optical sensor (11) with the thereto provided cleaning agent.

15. A computer program product (12) comprising instructions which, when the program is executed by a computer, cause the computer to carry out the method (100) of any one of claims 1 to 12.
